# EUROPEAN PATENT SPECIFICATION

(11) **EP 0 729 556 B1**
(45) Date of publication and mention of the grant of the patent: **01.09.1999**
(21) Application number: 94902327.9
(22) Date of filing: 16.11.1993
(51) Int. Cl.: F16L 11/04, F16L 37/092, F16L 37/084

(54) **COUPLING SYSTEM WITH QUICK CONNECTOR**
KUPPLUNGSSYSTEM MIT SCHNELLKUPPLUNG
SYSTEME DE COUPLAGE AVEC CONNECTEUR RAPIDE

(43) Date of publication of application: 04.09.1996
(73) Proprietor: PROPRIETARY TECHNOLOGY, INC., Southfield, MI 48037 (US)
(72) Inventor: BARTHOLOMEW, Donald Dekle, Mt. Clemens, MI 48045 (US)
(74) Representative: Price, Nigel John King
(86) International application number: US9311281
(87) International publication number: WO9514187

(56) References cited:
- FR-A- 1 391 023
- US-A- 2 467 370
- US-A- 4 573 716
- US-A- 4 946 205

## Description

### BACKGROUND OF THE INVENTION

This invention relates generally to conduit couplings through which fluid flows and specifically to a quick connector which retains a male conduit within a female receptacle.

In the automotive industry, as well as for many other industries, the need always exists for low cost, reliable and easy to assemble components. This need is especially apparent with respect to providing a connection between fluid conveying conduits, such as fuel, brake or refrigerant lines. Traditionally, such a connection is comprised of a male conduit being retained within a female receptacle through use of threaded fittings, flare fittings or through bolted on flanges.

More recently, a variety of snap together quick connect retainers have been used in place of the conventional methods. These quick connectors typically have a plurality of flexible legs which engage an annular bead attached to a male conduit and also engage an undercut groove formed within a female member. Two such examples are disclosed in U.S. Patent 4,601,497 entitled "Swivelable Quick Connector Assembly" which issued on July 22, 1986, and U.S. Patent 4,778,203 entitled "Swivelable Quick Connector for High Temperature Connection" which issued on October 18, 1988. Another quick connector is flat with pairs of annular arms extending therearound which are radially flexible. Other quick connectors which were invented by the inventor of the present invention are disclosed in U.S. Patents: 4,524,995 and 4,423,892, both of which are entitled "Swivelable Quick Connector Assembly" and which issued on June 25, 1985 and January 23, 1984, respectively.

While the aforementioned quick connectors present significant improvements in the art, each leg member of these devices must typically resist longitudinal pull out forces and must generate radial retention forces. Moreover, the legs are radially compressed during installation. Accordingly, in order to enhance the ability to either withstand forces in the longitudinal direction or generate radially directed forces, the part must often be compromised with regard to the other force perpendicular thereto. Therefore, it would be desirable to have a quick connector which can be easily installed and removed, is inexpensive to manufacture and which has separate segments for withstanding longitudinal pull out forces and generating radial retention forces, but which can be much shorter than conventional connectors by reducing the length inside the female portion of the connector to the length currently realized with threaded connectors.

### SUMMARY OF THE INVENTION

According to the present invention there is provided a coupling system comprising:
a male conduit having a cylindrical shape thereto and a distal end thereof;
a female receptacle having a bore extending there through defined by an inside surface there around, said female receptacle further having means for retaining therein, said distal end of said male conduit being insertable within said bore of said female receptacle; and
a quick connector having radially compressible means for retaining and longitudinally rigid means for retaining, said longitudinally rigid means of said quick connector being positioned around said male conduit a predetermined distance from said distal end thereof, a predetermined portion of said male conduit adjacent to said quick connector having radially expanded means for longitudinally securing said longitudinally rigid means of said quick connector thereto,
said radially compressible means including:-
first and second waist segments radially movable towards each other; and
means for urging said waist segments radially outward from each other to cause the radially compressible means to removably engage said retaining means of said female receptacle to couple said male conduit to said female receptacle, said urging means including a leg segment attached to both of said first and second waist segments, said leg segment being defined by a pair of elements coupled to each other and extending from said pair of waist segments outwardly from said female receptacle.

### BRIEF DESCRIPTION OF THE DRAWINGS

FIG. 1 is a perspective view showing a first preferred embodiment of a quick connector of the present invention;
FIG. 2 is a perspective view showing a radial member of the first preferred embodiment of the present invention quick connector of FIG. 1;
FIG. 3 is a perspective view showing a body segment of the first preferred embodiment of the present invention quick connector of FIG. 1;
FIG. 4 is a sectional view, taken along line 4-4 of FIG. 1, showing another embodiment of the first preferred embodiment of the present invention quick connector in relation to a male conduit and a female receptacle;
FIG. 4A is a sectional view, similar to that of FIG. 4, showing another embodiment of the female receptacle and another embodiment of a male conduit within which the first preferred embodiment of the present invention quick connector of FIG. 1 is employed;
FIG. 5 is a perspective view, opposite from that of FIG. 2, showing a radial member of a second preferred embodiment of the present invention quick connector of FIG. 1;
FIG. 6 is a fragmentary perspective view showing a locking member used in combination with the second preferred embodiment of the present invention quick connector of FIG. 5;
FIG. 7 is a perspective view, showing the locking member of FIG. 6 assembled to the second preferred embodiment of the present invention quick connector of FIG. 5;
FIG. 8 is a sectional view, similar to that of FIG. 4, showing the first preferred embodiment of the present invention quick connector of FIG. 1 used with a further embodiment of the male conduit;
FIG. 9 is a perspective view, similar to that of FIG. 5, showing a third preferred embodiment of the radial member of the present invention quick connector of FIG. 1;
FIG. 10 is a sectional view, similar to that of FIG. 4, showing the first preferred embodiment of the present invention quick connector of FIG. 1 in relation to another embodiment of a male conduit and a female receptacle; and
FIG. 11 is a sectional view, similar to that of FIG. 4, showing a dust cover used in combination with the first preferred embodiment of the present invention quick connector of FIG. 1 in relation to yet another embodiment male conduit.

### DETAILED DESCRIPTION OF THE PREFERRED EMBODIMENTS

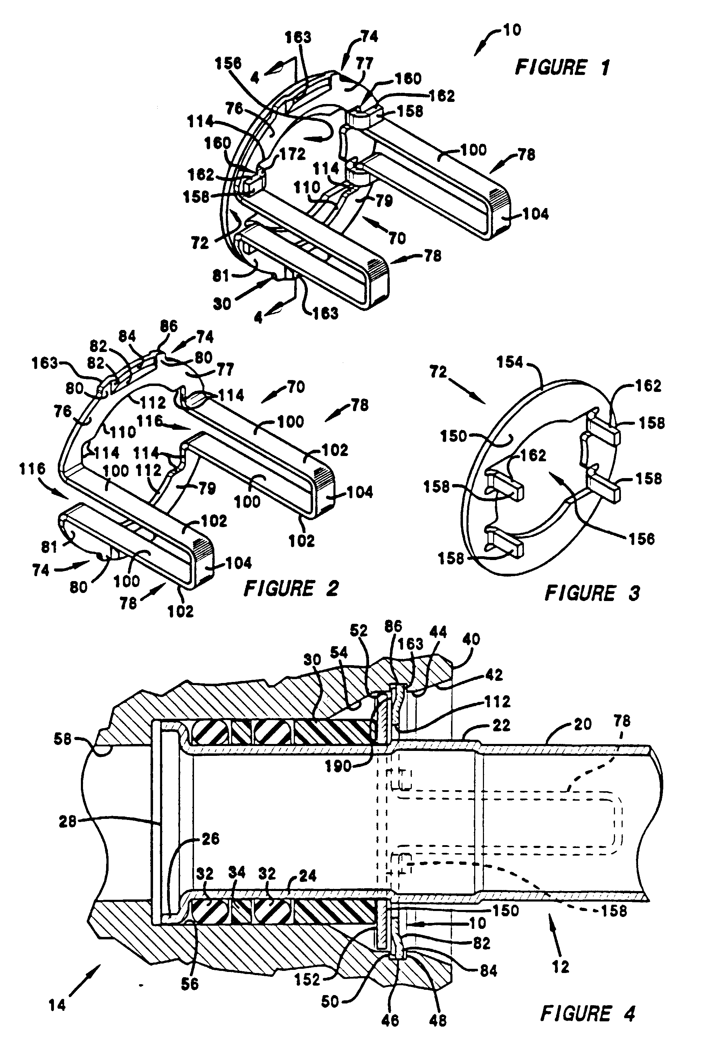

In the automotive industry the need exists for coupling a male tubular member or conduit to a female receptacle. For example, coolant hoses and oil hoses must be connected to a radiator or an engine block. Furthermore, brake hoses often need to be coupled to one another. Referring to FIGS. 1 through 4, a preferred embodiment of a quick connector 10 is used to operably retain a swivelable male conduit 12 to a female receptacle 14. A first preferred embodiment of male conduit 12 is a rigid metallic member having a connecting portion 20, a bulged portion 22, a coined recessed portion 24 and a flanged portion 26 proximate with a distal end 28 thereof. Male conduit 12 further has an annular bead or bushing 30 circumferentially attached therearound. A pair of O-ring seals 32 and an annular washer 34 are longitudinally juxtapositioned between bushing 30 and flanged portion 26 so as to circumferentially surround recessed portion 24. In coordination therewith, female receptacle 14 has an outboard face 40, a frusto-conical chamfered lead-in section 42, an annular ridge section 44, a retaining formation or more specifically an undercut groove 46 within which there is an outboard abutting wall 48 and an inboard abutting wall 50, an annular recessed section 52, a frusto-conical median section 54, a bore 56 defined by a cylindrical inside surface, and a passageway 58.

Quick connector 10 is defined by a radial member 70 and a body segment 72. As can best be observed in FIGS. 1, 2 and 4, radial member 70 further has a pair of shoulder segments 74, a plurality of waist segments 76, 77, 79 and 81, and a pair of leg segments 78. Each shoulder segment 74 has a pair of flanges 80 from which project three angled side walls 82 joined by a median wall 84, all of which are bordered by a distal edge 86. Moreover, each leg segment 78 has a pair of projecting elements 100 which project perpendicular from each adjacent waist segment 76, 77, 79 and 81. Each projecting element 100 is connected at a distal end 102 thereof by a truss element 104. Portions 100, 102 and 104 provide compressible outwardly springing action. Waist segments 76, 77, 79 and 81 define an opening 110 which has two partially cylindrical interior edges 112 and four corner areas 114. Each shoulder segment 74, the adjacent pair of waist segments 76 and 77, and the adjacent pair of projecting elements 100 are separated from the symmetrically opposing shoulder segment 74, waist segments 79 and 81, and projecting elements 100, by a pair of gaps 116. Accordingly, projecting elements 100 can be radially compressed toward one another such that shoulder segments 74 are radially translatable toward each other Leg segments 78 are also configured to urge shoulder segments 74 outward away from one another.

Referring to FIGS. 1, 3 and 4, body segment 72 has a pair of substantially flat faces 150 and 152 bordered by an annular peripheral edge 154 and an internal aperture 156 defined by an inner edge. Four bendable tabs 158 also project from the inner edge surrounding aperture 156. When body segment 72 is assembled to radial member 70, face 150 is mounted adjacent to waist segments 76, 77, 79 and 81 opposite from leg segments 78. Tabs 158 of body segment 72 are then aligned with corner areas 114 of radial member 70 and folded over upon a portion of each waist segment 76, 77, 79 and 81 proximate with leg segments 78. Nevertheless, a space 160 is present between an edge 162 of each tab 158 and the abutting wall of corner area 114. This allows waist segments 76 and 77, 79 and 81, and shoulder segments 74 to be radially translatable toward one another between tabs 158 and face 150 of body segment 72. Both radial portion 70 and body segment 72 are preferably stamped from a sheet of metallic material such as stainless steel.

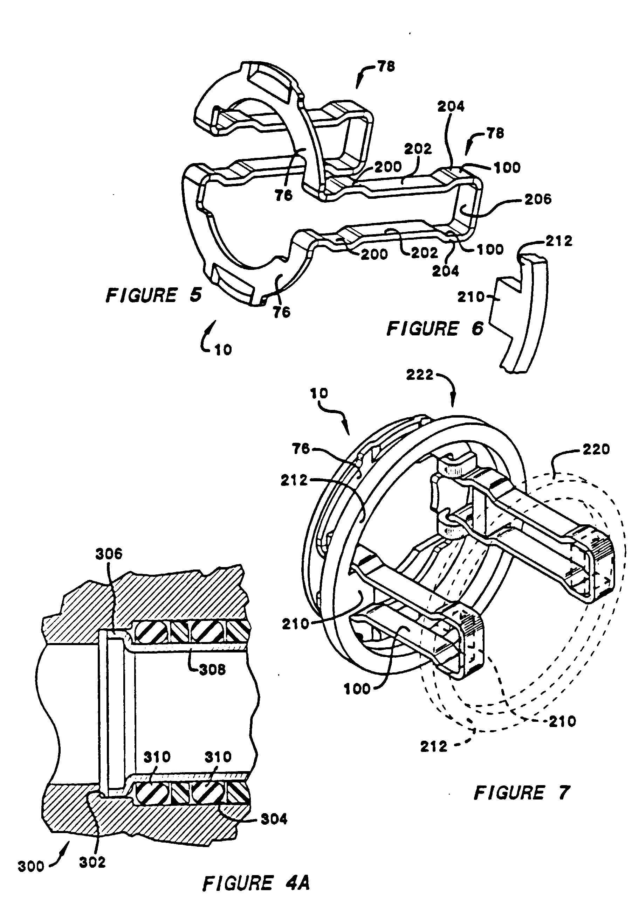

Aperture 156 of body segment 72 circumferentially surrounds male conduit 12 and is longitudinally trapped between bulged portion 22 and bushing 30. This is best shown in FIGS. 1 and 4. Furthermore, peripheral edge 154 of body segment 72 has a smaller diametral dimension than does annular ridge section 44 and annular recessed section 52 of female receptacle 14. Accordingly, body segment 72 serves as a longitudinal and radial retention means between male conduit 12 and radial member 70. During insertion of radial member 70 within female receptacle 14, chamfered section 42 serves to radially compress shoulder segments 74 toward one another. Subsequently, leg segments 78 urge shoulder segments 74 radially outward to engage undercut groove 46. Each shoulder segment 74 has an interface portion 163 which operably engages abutting walls 48 and 50 of female receptacle 14. Thus, radial member 70 is designed to provide radially expansive retention forces to retain body segment 72 to female receptacle 14.

An alternate embodiment of a female receptacle 300 is shown in FIG. 4A. This female receptacle 300 has a slightly constricted diameter bore 302 and a nominal diameter bore 304. In registry therewith, a flanged portion 306 of a male conduit 308 has a diameter corresponding to constricted diameter bore 302. This provides for improved retention of a pair of O-ring seals 310 prior to installation of male conduit 308 into female receptacle 300.

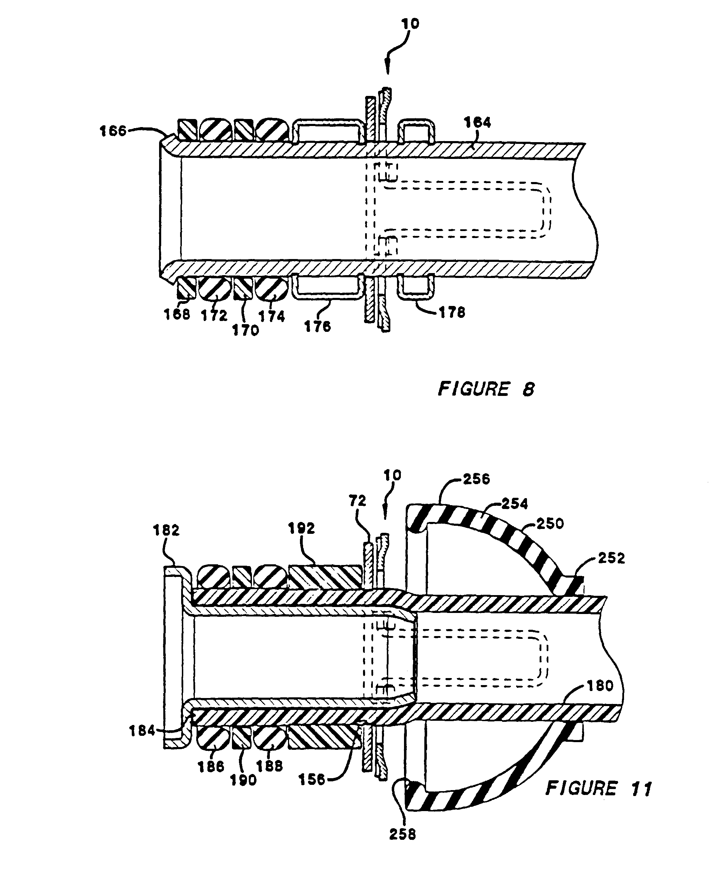

The male conduit assemblies of FIGS. 8 and 11 can alternatively be used in combination with the present invention quick connector 10. In FIG. 8 a male conduit 164 has a flared distal end 166 against which is located a pair of washers 168 and 170, and a pair of annular elastomeric seals 172 and 174. Furthermore, a first bushing 176 serves to prevent longitudinal movement of seal 174 and quick connector 10. Longitudinal movement of quick connector 10 may also be prevented by a second bushing 178. Thus, bushings 176 and 178 are secured around male conduit 164 in order to longitudinally trap quick connector 10 therebetween.

Referring to FIG. 11, a polymeric or rubber male conduit 180 is illustrated as having a flanged ferrule 182 inserted into a distal end 184 thereof. A pair of elastomeric seals 186 and 188 and a washer 190 are juxtapositioned proximate with distal end 184. Ferrule 182 serves to expand the diameter of male conduit 180 after installation of quick connector 10 thereon so as to cause the inner edge surrounding aperture 156 of the quick connector's body segment 72 to be compressibly attached therewith. A bushing 192 is also compressibly attached around male conduit 180 by employing ferrule 182 to expand conduit 180.

Another preferred embodiment of leg segments 78 of radial member 70 is shown in FIGS. 5 through 7. Each projecting element 100 has a first outwardly offset formation 200, an adjacent inwardly offset formation 202 and a second outwardly offset formation 204 proximate with a truss element 206. This provides a receiving area for a finger 210 of an annular locking member 212. Locking member 212 is first juxtapositioned in position 220 to allow compression of projecting elements 100 during installation. Locking member is then moved to position 222 after installation of quick connector 10 so as to prevent compression of projecting elements 100. This prevents inadvertent disassembly of quick connector 10 and male conduit 12 (see FIG. 4) from female receptacle 14 (see FIG. 1).

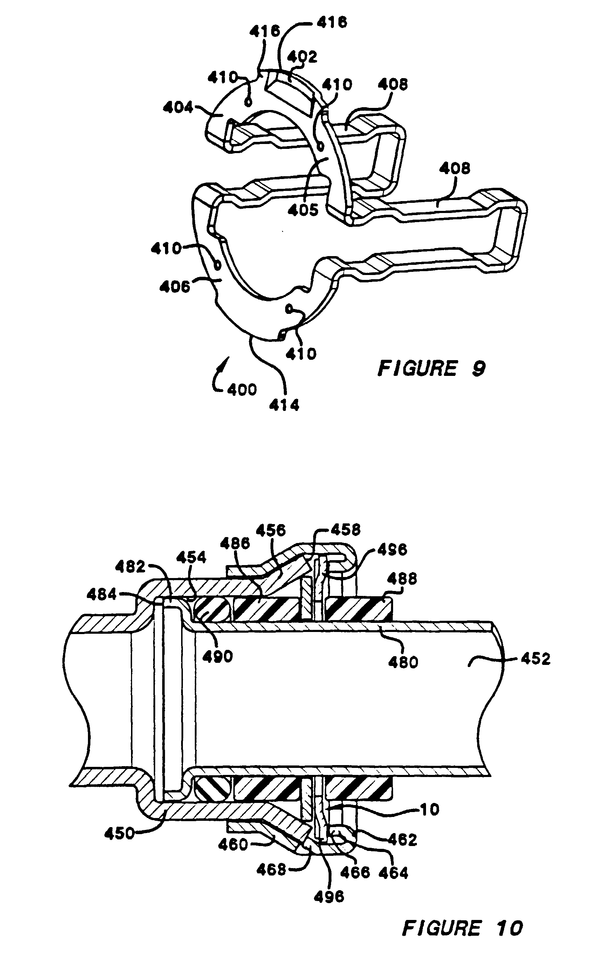

The third preferred embodiment of a radial member 400 employed in the quick connector 10 (see FIG. 1) of the present invention is illustrated in FIG. 9. Radial member has a single shoulder segment 402, a first waist segment 404, a second waist segment 405, a third waist segment 406 and a pair of leg segments 408. Leg segments 408 serve to radially urge shoulder segment 402 and the opposite waist segment 406 into interlocking engagement with female receptacle 14 (see FIG. 4). A peripheral section 414 of waist segment 406 and a peripheral section 416 of shoulder segment 402 serve as interface portions. A plurality of holes 410 are shown in waist segments 404, 405 and 406 so as to aid in use of an installation or disassembly tool (not shown).

A further embodiment of a female receptacle 450 and a male conduit 452 can be seen in FIG. 10. Female receptacle 450 has a receiving bore 454 and a frusto-conical lead-in portion 456 with a distal edge 458 therearound. A collar 460 snugly surrounds lead-in portion 456. Collar 460 has a turned section 462 and a return arm 464 with an abutting edge 466. A localized foot 468 projects radially inward from collar 460 so as to prevent undesirable longitudinal translation of collar 460 along female receptacle 450. The mating male conduit 452 has a nominal section 480 and a flanged portion 482 proximate with a distal end 484 thereof. A pair of bushings 486 and 488 are securely fastened around nominal section 480 of male conduit 452. An O-ring seal 490 is longitudinally trapped between flanged portion 482 and bushing 486. Also, the first preferred embodiment of quick connector 10 of the present invention is longitudinally trapped between bushings 486 and 488 such that an interface portion 496 is operably engaged between abutting edge 466 and distal edge 458 which act as a retaining formation or means.

Referring again to FIG. 11, a dust cover 250 is shown which prevents contaminating particles from entering bore 56 (see FIG. 4) of female receptacle 14 (see FIG. 4) when quick connector 10 and male conduit 180 are inserted therein. Cover 250 is comprised of an annular hub 252 which engagably surrounds male conduit 180. Hub 252 also can be longitudinally slid therealong. A somewhat parabolic-shaped cup 254 projects outward from annular hub 252. Furthermore, a circumferential outer wall 256 projects from an outermost portion of cup 254. Outer wall 256 is open toward distal end 184 of male conduit 180 and has an inwardly turned lip 258 therein. This inwardly turned lip 258 is interlockably engagable with female receptacle 14 (see FIG. 4) so as to prevent contamination from entering therein. Cover 250 is preferably made from an elastomeric material such as thermoplastic rubber.

While the preferred embodiment of a quick connector has been disclosed, it will be appreciated that various modifications may be made without departing from the present invention. For example, the body segment and the radial member may be integrated as one part. Furthermore, the peripheral edge of the body segment may have a square shape thereto with tabs being inwardly bent therefrom. Alternatively, the shoulder segments and waist segments may slidably overlap each other rather than having a gap therebetween. Also, the sealing means between the male conduit and the female receptacle may be comprised of a single elastomeric O-ring, a pumpable sealant or various other fluid sealing devices as is known within the art. Moreover, a variety of alternative dust cover shapes may be used in combination with a quick connector, male conduit and female receptacle. While specific materials have been disclosed in an exemplary fashion, various other materials may of course be employed.

## Claims

1. A coupling system comprising :
a male conduit (12, 164, 180) having a cylindrical shape thereto and a distal end (28) thereof;
a female receptacle (14) having a bore (56) extending there through defined by an inside surface (58) there around, said female receptacle further having means for retaining (46) therein, said distal end of said male conduit being insertable within said bore of said female receptacle; and
a quick connector (10) having radially compressible means (70) for retaining and longitudinally rigid means (72) for retaining, said longitudinally rigid means (72) of said quick connector (10) being positioned around said male conduit (12, 164, 180) a predetermined distance from said distal end (28) thereof, a predetermined portion of said male conduit (12, 164, 180) adjacent to said quick connector (10) having radially expanded means for longitudinally securing said longitudinally rigid means (72) of said quick connector (10) thereto,
said radially compressible means including:-
first and second waist segments (76, 77, 79, 81) radially movable towards each other; and
means (78) for urging said waist segments (76, 77, 79, 81) radially outward from each other to cause the radially compressible means to removably engage said retaining means (46) of said female receptacle (14) to couple said male conduit (12, 180) to said female receptacle (14), said urging means (78) including a leg segment (78) attached to both of said first and second waist segments (76, 77, 79, 81), said leg segment (78) being defined by a pair of elements (100) coupled to each other and extending from said pair of waist segments (76, 77, 79, 81) outwardly from said female receptacle (14).

2. The coupling system of claim 1 wherein said longitudinally rigid means (72) includes:
a body segment (72) having an aperture (156) there through, said body segment (72) being slidably coupled to said first and second waist segments (76, 77, 79, 81).

3. The coupling system of claim 2, wherein said urging means further comprises a second leg segment (78) connecting said first waist segment (76, 77, 79, 81) to said second waist segment (76, 77, 79, 81), said first and second leg segments (76, 77, 79, 81) being located radially opposite from one another, adjacent to and clear of said aperture (156) in said body segment (72), the radial orientation of said first and second leg segments (78) being substantially perpendicular with the radial orientation of said waist segments.

4. The coupling system of claim 3 wherein:
said body segment (72) is a separate part from said waist segments (76, 77, 79, 81) and said pair of leg segments (78), said body segment (72) further has a plurality of bendable tabs (158) projecting therefrom which are each securely affixed to said waist segments (76, 77, 79, 81) adjacent thereto, said plurality of tabs (158) extend from said body segment (72) such that said aperture (156) therein is in registry with an opening between said waist segments (76, 77, 79, 81) and is juxtapositioned centrally between said pair of leg segments (78) adjacent thereto; and
said waist segments (76, 77, 79, 81) are radially compressible toward each other between said plurality of tabs (158) and said body segment (72) slidably adjacent thereto.

5. The coupling system of any one of claims 2 to 4, wherein:
said body segment (72) is located longitudinally adjacent to said waist segments (76, 77, 79, 81) on a surface opposite from said pair of leg segments (78) extending therefrom.

6. The coupling system of any one of claims 2 to 5 wherein:
a peripheral edge (154) of said body segment (72) has a smaller radial dimension than does said bore (56) of said female receptacle (14).

7. The coupling system of any one of claims 2 to 6, further comprising:
an annular bulge (22) radially formed around said male conduit (12,164, 180) against which said body segment (72) is longitudinally positioned; and
a bushing (30) longitudinally displaced adjacent to said annular bulge (22) of said male conduit (12) such that said body segment (72) is securely affixed longitudinally there between.

8. The coupling system of any one of claims 2 to 7 further comprising:
a pair of bushings (176, 178) longitudinally displaced adjacent to each other around said male conduit (12, 164, 180) therein with said body segment (72) affixed longitudinally there between.

9. The coupling system of any one of claims 2 to 8, further comprising:
a ferrule (182) insertable within the distal end (28) of said male conduit (12, 164, 180),
said body segment (72) juxtapositioned longitudinally congruent with a predetermined portion of said ferrule (182)internally therein; and said ferrule causing said male conduit (12, 164, 180) there around to radially expand thereabout so as to securely affix said inner edge surrounding said aperture (156) of said body segment (72) thereof to said male conduit (12, 164, 180) captured there between.

10. The coupling system of any one of the preceding claims, further comprising;
a cover (250) surrounding a predetermined portion of said male conduit (12, 164, 180) with a portion thereof proximate to said female receptacle (14) there against, said cover (250) substantially preventing contaminants from entering said bore (56) of said female receptacle (14) thereof.

11. The coupling system of claim 10, wherein said cover (250) includes:
an annular hub section (252) engagably surrounding a preselected portion of said male conduit (12. 164, 180), said hub section (252) being longitudinally slidable there along;
a cup section (254) having an outer portion thereof, said cup section (254) projecting outward from said hub (252) therein;
an outer wall (256) projecting from said outer portion of said cup section (254) attached thereto, said outer wall (256) being open toward said distal end of said male conduit (12) thereof and having an inwardly turned lip (258) therein, said inwardly turned lip (258) being interlockably engagable with said female receptacle (14) thereby providing a contaminant seal between said male conduit (180) and said female receptacle (14) coupled thereto.

12. The coupling system of claim 11, further comprising :
said inwardly turned lip (258) projecting from said outer wall (256).

13. The coupling system of any one of claims 10 to 12, further comprising:
said substantially flexible cover (250) surrounding a predetermined portion of said male conduit (12, 164, 180) external to said bore (56) of said female receptacle (14), a predetermined portion of said substantially flexible cover (250) being proximate to said female receptacle (14) there against thereby providing a contaminant seal between said male conduit (12, 164, 180) and said female receptacle (14) coupled thereto.

14. The quick connector of any one of the preceding claims further comprising:
means for sealing circumferentially (32,172,174,186,188) surrounding said male conduit (12, 164, 180) disposed inside said bore (56) of said female receptacle (14), said sealing means (32, 172, 174, 186, 188) preventing fluid from passing between an outside surface of said male conduit (12, 164, 180) and said inside surface surrounding said bore (56) of said female receptacle (14) adjacent thereto.

15. The coupling system of claim 14, further comprising:
said means for sealing fluid (32, 172, 174, 186, 188) being longitudinally juxtapositioned along said male conduit (12, 164, 180) between said quick connector (10) and said distal (28) end thereof, said fluid sealing means (32,172,174,186,188) further located between an outside surface of said male conduit (12, 164, 180) and said inside surface of said female receptacle (14) surrounding said bore (56) there within.

16. The coupling system of any one of the preceding claims further comprising:
a shoulder segment (74) projecting from said first waist segment (76, 77, 79, 81) said shoulder segment (74) having an interface portion (163) thereon which attachably engages said female receptacle (14).

17. The coupling system of claim 16, further comprising:
said first and
second shoulder segments (74) projecting radially opposite from each other.

18. The coupling system of claim 16 or 17, wherein:
the or each said shoulder segment (74) is defined by a pair of flanges (80) from which a pair of side walls (82) joined by a median wall (84) project, the or each said shoulder segment (74) has a distal edge (86) thereto, said interface portion (163) of the or each said shoulder segments (74) being defined by a portion of said median wall (84) and an opposing portion of each of said pair of flanges (80) closest to said distal edge (86) there near.

19. The coupling system of claim 3 wherein said quick connector (10) includes:
said pair of leg segments (78) protruding through said bore (56) of said female receptacle (14) so as to be accessible from there out, said interface portions (163) insertable into said bore (56) of said female receptacle (14) by allowing said pair of outwardly extending elements (100) of each said leg segment (78) to at least partially compress toward one another, said pair of leg segments further urging said interface portions (163) radially outward so as to be engagably coupled within said female receptacle (14), said interface portions (163) being disengageable from said female receptacle (14) by at least partially compressing said outwardly extending elements (100) of said pair of leg segments (78) toward one another whereby said quick connector (10) can be longitudinally removed from said female receptacle (14).

## Patentansprüche

1. Kupplungssystem, umfassend:
eine Steckleitung (12, 164, 180) mit einer daran befindlichen zylindrischen Form und einem freien Ende (28);
eine Aufnahmebuchse (24) mit einer sich durch sie hindurch erstreckenden Bohrung (56), die durch eine umgebende Innenfläche (58) definiert wird, wobei die Aufnahmebuchse außerdem eine Halteeinrichtung (46) aufweist, in der sie das freie Ende der Steckleitung hält, die in die Bohrung der Aufnahmebuchse einführbar ist; und
einen Schnellverbinder (10) mit einer radial komprimierbaren Einrichtung (70) zum Halten und einer in Längsrichtung starren Einrichtung (72) zum Halten, von denen die in Längsrichtung starre Einrichtung (72) des Schnellverbinders (10) um die Steckleitung (12, 164, 180) in einer vorbestimmten Entfernung von dem freien Ende (28) angeordnet ist, ein vorbestimmter Abschnitt der Steckleitung (12, 164, 180) benachbart zu dem Schnellverbinder (10) eine radial ausweitbare Einrichtung aufweist, um die in Längsrichtung starre Einrichtung (72) des Schnellverbinders (10) in Längsrichtung festzulegen,
wobei die in radialer Richtung komprimierbare Einrichtung enthält:
erste und zweite Bundsegmente (76, 77, 79, 81), die radial aufeinander zu bewegbar sind; und
eine Einrichtung (78), die die Bundsegmente (76, 77, 79, 81) radial nach außen voneinander wegdrängt, damit die radial komprimierbare Einrichtung lösbar mit der Halteeinrichtung (46) der Aufnahmebuchse (14) in Eingriff tritt, um die Steckleitung (12, 180) mit der Aufnahmebuchse (14) zu koppeln, wobei die Drängeinrichtung (78) ein Schenkelsegment (78) enthält, welches sowohl an den ersten als auch den zweiten Bundelementen (76, 77, 79, 81) befestigt ist, das Schenkelsegment (78) gebildet wird durch ein Paar von Elementen (100), die miteinander gekoppelt sind und sich von dem Paar von Bundsegmenten (76, 77, 79, 81) ausgehend von der Aufnahmebuchse (14) nach außen erstrecken.

2. Kupplungssystem nach Anspruch 1, bei dem die in Längsrichtung starre Einrichtung (72) enthält:
ein mit einer Durchgangsöffnung (156) versehenes Körpersegment (72), welches verschieblich mit dem ersten und dem zweiten Bundsegment (76, 77, 79, 81) gekoppelt ist.

3. Kupplungssystem nach Anspruch 2, bei dem die Drängeinrichtung außerdem aufweist: ein zweites Schenkelsegment (78), welches das erste Bundsegment (76, 77, 79, 81) mit dem zweiten Bundsegment (76, 77, 79, 81) verbindet, wobei das erste und das zweite Schenkelsegment (76, 77, 79, 81) sich an einer Stelle radial entgegengesetzt von dem anderen in der Nachbarschaft zu der Öffnung (156) in dem Körpersegment (72), und mit der Öffnung nicht in Überlappung befindlich, angeordnet sind, wobei die radiale Orientierung des ersten und des zweiten Schenkelsegments (78) im wesentlichen senkrecht verläuft zu der radialen Orientierung der Bundsegmente.

4. Kupplungssystem nach Anspruch 3, bei dem
das Körpersegment (72) ein von den Bundsegmenten (76, 77, 79, 81) und dem Paar Schenkelsegmenten (78) separates Teil ist, wobei das Körpersegment (72) außerdem mehrere biegfähige Laschen (158) aufweist, die von ihm wegstehen und sicher an den ihnen benachbarten Bundsegmenten (76, 77, 79, 81) befestigt werden, wobei die mehreren Laschen (158) sich von dem Körpersegment (72) ausgehend in der Weise erstrecken, daß die darin befindliche Öffnung (156) mit einer Öffnung zwischen den Bundsegmenten (76, 77, 79, 81) fluchtet und mittig zwischen einem Paar von hierzu benachbarten Schenkelsegmenten (78) liegt; und
wobei die Bundsegmente (76, 77, 79, 81) radial aufeinander zu zwischen den mehreren Laschen (158) und dem ihnen verschieblich benachbartem Körpersegment (72) komprimierbar sind.

5. Kupplungssystem nach einem der Ansprüche 2 bis 4, bei dem
das Körpersegment (72) sich in Längsrichtung neben den Bundsegmenten (76, 77, 79, 81) auf einer Fläche befindet, welche dem sich davon abstehenden Paar von Schenkelsegmenten (78) entgegengesetzt ist.

6. Kupplungssystem nach einem der Ansprüche 2 bis 5, bei dem ein Umfangsrand (154) des Körpersegments (72) eine geringere radiale Abmessung besitzt als die Bohrung (76) in der Aufnahmebuchse (14).

7. Kupplungssystem nach einem der Ansprüche 2 bis 6, weiterhin umfassend:
eine ringförmige Aufweitung (22), die die Steckleitung (12, 164, 180) in radialer Richtung umgibt, und gegen die das Körpersegment (72) in Längsrichtung anliegt; und
eine Buchse (30), die benachbart zu der ringförmigen Aufweitung (22) der Steckleitung (12) derart angeordnet ist, daß das Körpersegment (72) dazwischen in Längsrichtung fixiert ist.

8. Kupplungssystem nach einem der Ansprüche 2 bis 7, weiterhin umfassend:
ein Paar Buchsen (176, 178), die in Längsrichtung voneinander beabstandet sind und die Steckleitung (12, 164, 180) umgeben, wobei das Körpersegment (72) in Längsrichtung zwischen ihnen angeordnet ist.

9. Kupplungssystem nach einem der Ansprüche 2 bis 8, weiterhin umfassend:
eine Zwinge (182), die in dem freien Ende (28) der Steckleitung (12, 164, 180) einsetzbar ist,
wobei das Körpersegment (72) in Längsrichtung übereinstimmend mit einem vorbestimmten Teil der Zwinge (182) in seinem Inneren benachbart ist, und die Zwinge die sie umgebende Steckleitung (12, 164, 180) veranlaßt, sich radial auszuweiten, um dadurch den die Öffnung (156) des Körpersegments (72) umgebenden Innenrand an der Steckleitung (12, 164, 180), die zwischen ihnen eingefaßt ist, zu fixieren.

10. Kupplungssystem nach einem der vorhergehenden Ansprüche, außerdem umfassend:
eine Abdeckung (250), die einen vorbestimmten Abschnitt der Steckleitung (12, 164, 180) mit einem der Aufnahmebuchse (14) benachbarten Abschnitt in Anlage mit der Aufnahmebuchse umgibt, wobei die Abdeckung (250) im wesentlichen verhindert, daß Verunreinigungen in die Bohrung (56) der Aufnahmebuchse (14) gelangen.

11. Kupplungssystem nach Anspruch 10, bei dem die Abdeckung (250) aufweist:
einen ringförmigen Nabenabschnitt (252), der einen vorgewählten Abschnitt der Steckleitung (12, 164, 180) in Anlage umgibt und entlang der Steckleitung in Längsrichtung verschieblich ist;
einen Becherabschnitt (254) mit einem Außenabschnitt, wobei der Becherabschnitt (254) von der darin enthaltenen Nabe (252) nach außen vorsteht;
eine Außenwand (256), die von dem Außenabschnitt des daran befestigten Becherabschnitts (254) vorsteht, wobei die Außenwand (256) in Richtung des freien Endes der Steckleitung (12) offen ist und eine nach innen gerichtete Lippe (258) enthält, die verriegelnd in Eingriff steht mit der Aufnahmebuchse (14), um hierdurch eine Verunreinigungsabdichtung zwischen der Steckleitung (180) und der damit gekoppelten Aufnahmebuchse (14) zu schaffen.

12. Kupplungssystem nach Anspruch 11, weiterhin umfassend:
die nach innen gerichtete Lippe (258), die von der Außenwand (256) absteht.

13. Kupplungssystem nach einem der Ansprüche 10 bis 12, weiterhin umfassend:
die im wesentlichen flexible Abdeckung (250), die einen vorbestimmten Abschnitt der Steckleitung (12, 164, 180) außerhalb der Bohrung (56) der Aufnahmebuchse (14) umgibt, wobei ein vorbestimmter Teil der im wesentlichen flexiblen Abdeckung (250) sich in der Nähe der Aufnahmebuchse (14) befindet, um dadurch eine Verunreinigungsabdichtung zwischen der Steckleitung (12, 164, 180) und der damit gekoppelten Aufnahmebuchse (14) zu schaffen.

14. Schnellverbinder nach einem der vorhergehenden Ansprüche, umfassend:
eine Einrichtung zum umfänglichen Abdichten (32, 172, 174, 186, 188), welche die Steckleitung (12, 164, 180), die sich im Inneren der Bohrung (56) der Aufnahmebuchse (14) befindet, umgibt, wobei die Abdichtungseinrichtung (32, 172, 174, 186, 188) verhindert, daß Fluid zwischen einer Außenfläche der Steckleitung (12, 164, 180) und der die Bohrung (56) der benachbarten Aufnahmebuchse (14) umgebenden Innenfläche hindurchgelangt.

15. Kupplungssystem nach Anspruch 14, weiterhin umfassend:
die Einrichtung zur Fluidabdichtung (32, 172, 174, 186, 188) in LängsNachbarschaft entlang der Steckleitung (12, 164, 180) zwischen dem Schnellverbinder (10) und dessen freiem Ende (28), wobei die Fluidabdichtungseinrichtung (32, 172, 174, 186, 188) sich außerdem zwischen der Außenfläche der Steckleitung (12, 164, 180) und der Innenfläche der Aufnahmebuchse (14) befindet, die darin die Bohrung (56) umgibt.

16. Kupplungssystem nach einem der vorhergehenden Ansprüche, weiterhin umfassend:
ein Schultersegment (74), welches von dem ersten Bundsegment (76, 77, 79, 81) vorsteht, wobei das Schultersegment (74) einen Zwischenflächenabschnitt (173) aufweist, der mit der Aufnahmebuchse (14) in Befestigungseingriff steht.

17. Kupplungssystem nach Anspruch 16, umfassend das erste und das zweite Schultersegment (74), die radial einander abgewandt wegstehen.

18. Kupplungssystem nach Anspruch 16 oder 17, bei dem:
das oder jedes Schultersegment (74) definiert wird durch ein Paar Flansche (80), von denen ein Paar über eine Mittelwand (84) verbundener Seitenwände (82) vorstehen, wobei das oder jedes Schultersegment (74) eine freie Kante (76) aufweist, wobei der Zwischenflächenabschnitt (173) des oder jedes Schultersegments (74) definiert wird durch einen Bereich der Mittelwand (84) und einen gegenüberliegenden Abschnitt jedes der paarweisen Flansche (80), die der nächstgelegenen freien Kante (86) am nächsten liegen.

19. Kupplungssystem nach Anspruch 3, bei dem der Schnellverbinder (10) aufweist:
das Paar von Schenkelsegmenten (78), die durch die Bohrung (56) der Aufnahmebuchse (14) derart vorstehen, daß sie von dort aus zugänglich sind, wobei die Zwischenflächenabschnitte (163) in die Bohrung (56) der Aufnahmebuchse (14) dadurch einführbar sind, daß dem Paar von nach außen erstreckten Elementen (100) jedes Schenkelsegments (78) ermöglicht wird, zumindest teilweise aufeinander zu zusammengedrückt zu werden, wobei das Paar von Schenkelsegmenten außerdem die Zwischenflächenabschnitte (163) radial nach außen drängt, um eingreifend in der Aufnahmebuchse (14) gekoppelt zu werden, wobei die Zwischenflächenabschnitte (163) von der Aufnahmebuchse (14) dadurch lösbar sind, daß man die nach außen erstreckten Elemente (100) des Paares von Schenkelsegmenten (78) aufeinander zu zumindest teilweise zusammendrückt, wodurch der Schnellverbinder (10) in Längsrichtung aus der Aufnahmebuchse (14) entnommen werden kann.

## Revendications

1. Système de couplage comprenant :
un tuyau mâle (12, 164, 180) de forme cylindrique et comportant une extrémité distale (28);
un élément femelle (14) comportant un alésage (56) s'étendant à l'intérieur et défini par une surface intérieure (58), ledit élément femelle comportant en outre un moyen de retenue (46), ladite extrémité distale dudit tuyau mâle pouvant être insérée dans ledit alésage dudit élément femelle; et
un raccord rapide (10) comportant un moyen comprimable radialement (70) pour la retenue et un moyen rigide longitudinalement (72) pour la retenue, ledit moyen rigide longitudinalement (72) dudit raccord rapide (10) étant positionné autour dudit tuyau mâle (12, 164, 180) à une distance prédéterminée de ladite extrémité distale (28) de ce dernier, une partie prédéterminée dudit tuyau mâle (12, 164, 180) adjacente audit raccord rapide (10) comportant un moyen expansé radialement pour y fixer longitudinalement ledit moyen rigide longitudinalement (72) dudit raccord rapide (10),
ledit moyen comprimable radialement incluant :
un premier et un second segments de rétrécissement (76, 77, 79, 81) mobiles radialement l'un vers l'autre; et
un moyen (78) servant à écarter lesdits segments de rétrécissement (76, 77, 79, 81) l'un de l'autre radialement pour mettre en prise, de manière détachable, le moyen comprimable radialement avec ledit moyen de retenue (46) dudit élément femelle (14) afin de coupler ledit tuyau mâle (12, 180) audit élément femelle (14), ledit moyen d'écartement (78) incluant un segment formant bras (78) fixé à chacun desdits premier et deuxième segments de rétrécissement (76, 77, 79, 81), ledit segment formant bras (78) étant défini par une paire d'éléments (100) couplés l'un à l'autre et s'étendant depuis ladite paire de segments de rétrécissement (76, 77, 79, 81) vers l'extérieur dudit élément femelle (14).

2. Système de couplage selon la revendication 1 dans lequel ledit moyen rigide longitudinalement (72) inclut :
un segment formant corps (72) comportant une ouverture (156) traversante, ledit segment formant corps (72) étant couplé à coulissement auxdits premier et second segments de rétrécissement (76, 77, 79, 81).

3. Système de couplage selon la revendication 2 dans lequel ledit moyen d'écartement comprend en outre un second segment formant bras (78) reliant ledit premier segment de rétrécissement (76, 77, 79, 81) audit second segment de rétrécissement (76, 77, 79, 81), lesdits premier et second segments formant bras (78) étant situés opposés radialement l'un à l'autre, adjacents à ladite ouverture (156) dudit segment formant corps (72) et sans obstruer ladite ouverture, l'orientation radiale desdits premier et second segments formant bras (78) étant sensiblement perpendiculaire à l'orientation radiale desdits segments de rétrécissement.

4. Système de couplage selon la revendication 3 dans lequel :
ledit segment formant corps (72) est une pièce distincte desdits segments de rétrécissement (76, 77, 79, 81) et de ladite paire de segments formant bras (78), ledit segment formant corps (72) comporte en outre une pluralité de pattes (158) pouvant fléchir et faisant saillie depuis ledit segment formant corps, chacune étant fixée solidement auxdits segments de rétrécissement (76, 77, 79, 81) qui y sont adjacents, ladite pluralité de pattes (158) s'étend depuis ledit segment formant corps (72) de telle manière que ladite ouverture (156) dans celui-ci coïncide avec une ouverture entre lesdits segments de rétrécissement (76, 77, 79, 81) et est en juxtaposition centrale entre lesdits segments formant bras (78) qui lui sont adjacents; et
lesdits segments de rétrécissement (76, 77, 79, 81) sont comprimables radialement l'un vers l'autre entre ladite pluralité de pattes (158) et ledit segment formant corps (72) qui y est adjacent à coulissement.

5. Système de couplage selon l'une quelconque des revendications 2 à 4, dans lequel :
ledit segment formant corps (72) est en position longitudinalement adjacente auxdits segments de rétrécissement (76, 77, 79, 81) sur une surface opposée à ladite paire de segments formant bras (78) s'étendant depuis ceux-ci.

6. Système de couplage selon l'une quelconque des revendications 2 à 5, dans lequel :
un bord périphérique (154) dudit segment formant corps (72) est de dimension radiale inférieure à celle dudit alésage (56) dudit élément femelle (14).

7. Système de couplage selon l'une quelconque des revendications 2 à 6, comprenant de plus :
un renflement annulaire (22) réalisé radialement autour dudit tuyau mâle (12, 164, 180) et contre lequel est positionné longitudinalement ledit segment formant corps (72); et
une douille (30) déplacée longitudinalement, adjacente audit renflement annulaire (22) dudit tuyau mâle (12) de sorte que ledit segment formant corps (72) y est solidement fixé.

8. Système de couplage selon l'une quelconque des revendications 2 à 7, comprenant de plus :
deux douilles (176, 178) déplacées longitudinalement, adjacentes l'une à l'autre autour dudit tuyau mâle (12, 164, 180), ledit segment formant corps (72) y étant fixé longitudinalement.

9. Système de couplage selon l'une quelconque des revendications 2 à 8, comprenant de plus :
une virole (182) pouvant être insérée dans l'extrémité distale (28) dudit tuyau mâle (12, 164, 180),
ledit segment formant corps (72) est en juxtaposition longitudinale, congruent à une partie prédéterminée de ladite virole (182) de manière interne; ladite virole faisant s'élargir radialement ledit tuyau mâle (12, 164, 180) afin de fixer solidement ledit bord interne entourant ladite ouverture (156) dudit segment formant corps (72) audit tuyau mâle (12, 164, 180) pris entre les deux.

10. Système de couplage selon l'une quelconque des revendications précédentes, comprenant de plus :
un couvercle (250) entourant une partie prédéterminée dudit tuyau mâle (12, 164, 180), une partie de celui-ci étant à proximité dudit élément femelle (14), ledit couvercle (250) empêchant sensiblement des contaminants d'entrer dans ledit alésage (56) dudit élément femelle (14).

11. Système de couplage selon la revendication 10, dans lequel ledit couvercle (250) inclut :
une section formant tulipe annulaire (252) entourant en prise une partie présélectionnée dudit tuyau mâle (12, 164, 180), ladite section formant tulipe annulaire (252) pouvant coulisser longitudinalement le long de celui-ci;
une section formant coupelle (254) comportant une partie extérieure, ladite section formant coupelle (254) faisant saillie vers l'extérieur depuis ladite tulipe (252);
une paroi extérieure (256) faisant saillie depuis ladite partie extérieure de ladite section formant coupelle (254) qui y est fixée, ladite paroi extérieure (256) étant ouverte vers ladite extrémité distale dudit tuyau mâle (12) et comportant une lèvre tournée vers l'intérieur (258), ladite lèvre tournée vers l'intérieur (258) pouvant être mise en prise en verrouillage réciproque avec ledit élément réciproque (14), constituant ainsi un dispositif d'étanchéité entre ledit tuyau mâle (180) et ledit élément femelle (14) qui y est couplé.

12. Système de couplage selon la revendication 11, comprenant de plus :
ladite lèvre tournée vers l'intérieur (258) faisant saillie depuis ladite paroi extérieure (256).

13. Système de couplage selon l'une quelconque des revendications 10 à 12, comprenant de plus :
ledit couvercle (250) entourant une partie prédéterminée dudit tuyau mâle (12, 164, 180) extérieur audit alésage (56) dudit élément femelle (14), une partie prédéterminée dudit couvercle (250) étant à proximité dudit élément femelle (14), constituant ainsi un dispositif d'étanchéité entre ledit tuyau mâle (12, 164, 180) et ledit élément femelle (14) qui y est couplé.

14. Raccord rapide selon l'une quelconque des revendications précédentes, comprenant en outre :
des moyens servant à étanchéifier circonférentiellement (32, 172, 174, 186, 188) entourant ledit tuyau mâle (12, 164, 180) disposé à l'intérieur dudit alésage (56) dudit élément femelle (14), lesdits moyens d'étanchéification (32, 172, 174, 186, 188) empêchant le fluide de passer entre une surface extérieure dudit tuyau mâle (12, 164, 180) et ladite surface intérieure entourant ledit alésage (56) dudit élément femelle (14) qui y est adjacent.

15. Système de couplage selon la revendication 14, comprenant de plus :
lesdits moyens d'étanchéification (32, 172, 174, 186, 188) juxtaposés longitudinalement le long dudit tuyau mâle (12, 164, 180) entre ledit raccord rapide (10) et ladite extrémité distale (28), lesdits moyens d'étanchéification (32, 172, 174, 186, 188) étant de plus situés entre une surface extérieure dudit tuyau mâle (12, 164, 180) et ladite surface intérieure dudit élément femelle (14) entourant ledit alésage (56) à l'intérieur de celui-ci.

16. Système de couplage selon l'une quelconque des revendications précédentes, comprenant de plus :
un segment formant épaulement (74) faisant saillie depuis ledit premier segment de rétrécissement (76, 77, 79, 81), ledit segment formant épaulement (74) comportant une partie formant interface (163) qui se met en prise avec ledit élément femelle (14).

17. Système de couplage selon la revendication 16, comprenant de plus :
un premier et un second segments formant épaulement (74) faisant saillie radialement à l'opposé l'un de l'autre.

18. Système de couplage selon la revendication 16 ou 17, dans lequel :
le segment ou chaque segment formant épaulement (74) est défini par une paire de brides (80) desquelles font saillie deux parois latérales (82) reliées par une paroi médiane (84), le segment ou chaque segment formant épaulement (74) comporte un bord distal (86), ladite partie formant interface du segment ou de chaque segment formant épaulement (74) étant définie par une partie dudit mur médian (84) et une partie opposée de chacune desdites paires de brides (80) les plus proches dudit bord distal (86).

19. Système de couplage selon la revendication 3, dans lequel ledit raccord rapide (10) inclut :
ladite paire de segments formant bras (78) faisant saillie dans ledit alésage (56) dudit élément femelle (14) afin d'être accessible par l'extérieur de celui-ci, lesdites parties formant interface (163) pouvant être insérées dans ledit alésage (56) dudit élément femelle (14) en permettant à ladite paire d'éléments s'étendant vers l'extérieur (100) de chacun desdits segments formant bras (78) de se comprimer, au moins partiellement, l'un vers l'autre, ladite paire de segments formant bras écartant en outre lesdites parties formant interface (163) radialement vers l'extérieur afin d'être mis en prise à l'intérieur dudit élément femelle (14), lesdites parties formant interface (163) pouvant être dégagées dudit élément femelle (14) en comprimant, au moins partiellement, lesdits éléments s'étendant vers l'extérieur (100) de ladite paire de segments formant bras (78) l'un vers l'autre, ce qui permet audit raccord rapide (10) d'être retiré longitudinalement dudit élément femelle (14).
